# FASCICULE DE BREVET EUROPEEN

(11) **EP 2 313 894 B1**
(45) Date de publication et mention de la délivrance du brevet: **11.06.2014**
(21) Numéro de dépôt: 09737085.2
(22) Date de dépôt: 20.07.2009
(51) Int. Cl.: H01B 1/22, C08K 13/06, C08K 3/08

(54) **MATÉRIAU SOLIDE COMPOSITE ÉLECTRIQUEMENT CONDUCTEUR ET PROCÉDÉ D'OBTENTION D'UN TEL MATÉRIAU**
ELEKTRISCH LEITFÄHIGES FESTES VERBUNDMATERIAL UND VERFAHREN ZU SEINER ERHALTUNG
ELECTRICALLY CONDUCTIVE SOLID COMPOSITE MATERIAL AND METHOD FOR OBTAINING SAME

(30) Priorité: 29.07.2008 FR 0804309
(43) Date de publication de la demande: 27.04.2011
(73) Titulaire: Université Paul Sabatier Toulouse III, 31062 Toulouse cedex 4 (FR)
(72) Inventeur: LONJON, Antoine, F-31000 Toulouse (FR); DANTRAS, Eric, F-31500 Toulouse (FR); DEMONT, Philippe, Toulouse 31500 (FR); LACABANNE, Colette, F-31500 Toulouse (FR)
(74) Mandataire: Cabinet BARRE LAFORGUE & associés
(86) Numéro de dépôt international: PCT/FR2009/051442
(87) Numéro de publication internationale: WO 2010/012935

(56) Documents cités:
- WO-A-2004/081111
- WO-A-2004/096903
- FR-A- 2 836 476
- FR-A- 2 847 902
- US-A1- 2005 045 855

## Description

L'invention concerne un matériau solide composite électriquement conducteur, et un procédé d'obtention d'un tel matériau.

Dans de nombreuses applications, on cherche à obtenir des matériaux solides composites qui, d'une part, présentent les avantages des matériaux composites vis-à-vis des métaux en termes de propriétés mécaniques (notamment plus grande légèreté pour une rigidité ou une résistance équivalente), mais qui, d'autre part, soient électriquement conducteurs, c'est-à-dire présentent une conductivité électrique supérieure à 1 S.m⁻¹, typiquement de l'ordre de 10² S.m⁻¹. Tel est le cas en particulier pour la réalisation de pièces de support ou de structure (châssis, plaques...), de matériaux (colles, joints) pour l'assemblage de pièces de structure, ou pour le revêtement (peintures) de pièces de véhicules et plus particulièrement d'aéronefs et de véhicules automobiles.

Dans d'autres applications, on cherche à obtenir de tels matériaux solides composites qui soient aussi thermiquement conducteurs, c'est-à-dire qui présentent une conductivité thermique supérieure à 10⁻⁴ W/mK. Tel est le cas en particulier pour la réalisation de pièces susceptibles d'être chauffées par effet Joule, notamment en vue de leur dégivrage.

L'invention s'étend aussi un matériau composite condensé de grande viscosité, notamment des colles, présentant une telle conductivité thermique et/ou une telle conductivité électrique, mais restant toutefois susceptible de s'écouler.

On a déjà proposé d'incorporer des charges de particules micrométriques ou nanométriques de matériau électriquement conducteur, notamment de nanotubes de carbone, dans des matériaux composites (cf. WO 01/87193). Néanmoins, le problème qui se pose est celui d'obtenir une conductivité suffisante sans dégradation des propriétés mécaniques du matériau composite. En effet, les meilleures conductivités obtenues sont de l'ordre de 10⁻¹ S.m⁻¹ avec les nanotubes de carbone avec de très faibles taux de charge (environ 1% volumique) sans dégradation notable des propriétés mécaniques. D'autre part, les conductivités maximales sont obtenues au prix d'une quantité volumique supérieure à 25%, typiquement de l'ordre de 50%, qui modifie considérablement les propriétés mécaniques du matériau composite obtenu.

L'invention vise donc à proposer un matériau solide composite présentant simultanément des propriétés mécaniques comparables à celles des matériaux composites isolants, mais une conductivité électrique supérieure à 1 S.m⁻¹.

L'invention vise aussi à proposer un tel matériau composite présentant des propriétés mécaniques conservées par rapport aux matériaux composites isolants, mais aussi une conductivité thermique accrue, notamment d'un facteur 20000, par rapport aux matériaux composites isolants.

Plus particulièrement, l'invention vise à proposer un matériau solide composite présentant une matrice solide (homogène ou composite) de matériau électriquement isolant, et une conductivité électrique supérieure à 1 S.m⁻¹, les propriétés mécaniques finales du matériau solide composite selon l'invention étant au moins à 90% celles de la matrice solide.

L'invention vise en outre à proposer un matériau composite présentant une conductivité électrique supérieure à 1 S.m⁻¹, mais dans lequel la surcharge massique liée au constituant électriquement conducteur dans le matériau composite n'excède pas 30%.

L'invention vise aussi à proposer un procédé d'obtention d'un tel matériau selon l'invention qui soit simple, peu coûteux, rapide à mettre en oeuvre et respectueux de l'environnement, permettant la réalisation de pièces de formes quelconques avec des compositions de matériaux pouvant aussi être diverses.

Pour ce faire, l'invention concerne un matériau solide composite électriquement conducteur comprenant :
- une matrice solide de matériau électriquement isolant,
- une charge de matériau électriquement conducteur,
   caractérisé en ce que ladite charge comprend des nanoparticules, dites nanoparticules filiformes, présentant :
   o une longueur, s'étendant selon une direction principale d'allongement,
   o deux dimensions, dites dimensions orthogonales, s'étendant selon deux directions transversales orthogonales entre elles et orthogonales à ladite direction principale d'allongement, lesdites dimensions orthogonales étant inférieures à ladite longueur et inférieures à 500 nm, et,
   o deux rapports, dits facteurs de forme, entre ladite longueur et chacune des deux dimensions orthogonales, lesdits facteurs de forme étant supérieurs à 50,
lesdites nanoparticules filiformes étant réparties dans le volume de la matrice solide avec une quantité en volume inférieure à 10%, notamment inférieure à 5%.

Plus particulièrement, un matériau selon l'invention est avantageusement caractérisé par l'une au moins des caractéristiques suivantes :
- les deux dimensions orthogonales des nanoparticules filiformes sont comprises entre 50 nm et 300 nm -notamment de l'ordre de 200 nm-,
- les nanoparticules filiformes présentent une longueur supérieure à 1 µm, notamment comprise entre 30 µm et 300 µm, en particulier de l'ordre de 50 µm,
- les deux dimensions orthogonales des nanoparticules filiformes sont le diamètre de la section droite transversale des nanoparticules filiformes,
- les nanoparticules filiformes présentent deux facteurs de forme supérieurs à 50 -notamment de l'ordre de 250-,
- les nanoparticules filiformes sont formées d'un matériau choisi dans le groupe formé de l'or, de l'argent, du nickel, du cobalt, du cuivre et de leurs alliages, à l'état non oxydé,
- les nanoparticules filiformes sont formées d'un matériau métallique non oxydé,
- il comprend une quantité de nanoparticules filiformes comprise entre 0,5% et 5% en volume,
- la matrice solide est formée d'un matériau polymère,
- la matrice solide comprend au moins un matériau polymère solide, notamment choisi parmi les matériaux thermoplastiques, les matériaux réticulables, en particulier les matériaux thermodurcissables.

Dans tout le texte :
- une « nanoparticule filiforme» au sens de l'invention est notamment un nano-bâtonnet ou un nano-fil. En particulier, les deux dimensions orthogonales d'une nanoparticule filiforme sont le diamètre de sa section droite transversale. Une nanoparticule filiforme peut en outre être un ruban dans lequel les deux dimensions orthogonales de la nanoparticule filiforme selon l'invention sont sa largeur (première dimension orthogonale) et son épaisseur (deuxième dimension orthogonale).
- le terme « facteur de forme » est le rapport entre la longueur d'une nanoparticule filiforme, et l'une des deux dimensions orthogonales de ladite nanoparticule filiforme. A titre d'exemple, un facteur de forme égal à 200 pour une nanoparticule filiforme de forme globalement cylindrique de révolution signifie que sa longueur est sensiblement égale à 200 fois son diamètre moyen. En tout état de cause, une nanoparticule filiforme est de forme globalement allongée dans laquelle les rapports de sa plus grande dimension (sa longueur) avec chacune des deux dimensions orthogonales sont supérieurs à 50.

En particulier, le métal formant les nanoparticules filiformes est choisi dans le groupe formé des métaux non oxydables et des métaux susceptibles de former par oxydation, une couche stabilisée de métal oxydé s'étendant en surface des nanoparticules filiformes et adaptée pour préserver de l'oxydation, le métal massif sous-jacent non oxydé. Ainsi, un métal susceptible de former par oxydation une couche surfacique d'épaisseur limitée en préservant de l'oxydation le métal sous-jacent est adapté pour former un matériau composite de conductivité électrique élevée après élimination de la couche surfacique oxydée. De tels métaux sont notamment les métaux dont l'oxydation superficielle conduit à la formation d'une couche superficielle, dite couche de passivation, protectrice vis-à-vis de l'oxydation.

Avantageusement et selon l'invention, le matériau présente une conductivité électrique supérieure à 1 S.m⁻¹, notamment de l'ordre de 10² S.m⁻¹. En particulier, un tel matériau selon l'invention comprend une quantité de nanoparticules filiformes, de l'ordre de 5% en volume et une conductivité électrique de l'ordre de 10² S.m⁻¹. Plus particulièrement et selon l'invention, tel matériau comprend une quantité de nanoparticules filiformes de l'ordre de 5% en volume, une conductivité électrique de l'ordre de 10² S.m⁻¹ et des propriétés mécaniques finales sensiblement conservées (notamment à plus de 90%) par rapport à la matrice solide.

L'invention s'étend à un procédé d'obtention d'un matériau selon l'invention. L'invention concerne donc un procédé d'obtention d'un matériau solide composite conducteur caractérisé en ce qu'on réalise une dispersion de nanoparticules filiformes de matériau électriquement conducteur présentant une longueur, s'étendant selon une direction principale d'allongement, deux dimensions, dites dimensions orthogonales, s'étendant selon deux directions transversales orthogonales entre elles et orthogonales à ladite direction principale d'allongement, lesdites dimensions orthogonales étant inférieures à ladite longueur et inférieures à 500 nm, et deux rapports, dits facteurs de forme, entre la longueur et chacune des deux dimensions orthogonales, lesdits facteurs de forme étant supérieurs à 50, dans une composition liquide précurseur d'une matrice solide de matériau électriquement isolant, de façon à obtenir une quantité en volume de nanoparticules filiformes dans le matériau composite inférieure à 10%, notamment inférieure à 5%.

Avantageusement et selon l'invention, on utilise des nanoparticules filiformes dont les deux facteurs de forme sont supérieurs à 50, particulièrement compris entre 50 et 5000, plus particulièrement compris entre 100 et 1000, particulièrement et avantageusement de l'ordre de 250.

Avantageusement et selon l'invention, on réalise une dispersion des nanoparticules filiformes dans un solvant liquide, on mélange cette dispersion dans la composition liquide précurseur, et on élimine le solvant liquide. Ledit solvant liquide est de préférence choisi parmi les solvants non susceptibles d'oxyder les nanoparticules filiformes, ou de ne les oxyder que partiellement et de façon limitée.

En outre, avantageusement et selon l'invention, la matrice solide comprenant au moins un matériau polymère, la composition liquide précurseur est une solution dudit matériau polymère dans un solvant liquide choisi parmi le solvant de la dispersion de nanoparticules filiformes, les solvants miscibles avec le solvant de la dispersion de nanoparticules filiformes. La dispersion de nanoparticules filiformes peut avantageusement être incorporée à ladite composition liquide précurseur au cours d'une étape de fabrication de la matrice solide.

Avantageusement et selon l'invention, la matrice solide comprenant au moins un matériau thermoplastique, la composition liquide précurseur est formée de la matrice solide à l'état fondu. En variante, avantageusement et selon l'invention, la matrice solide comprenant au moins un matériau thermodurcissable, la composition liquide précurseur est formée d'au moins une composition liquide entrant dans la composition du matériau thermodurcissable.

Avantageusement et selon l'invention, la matrice solide comprenant au moins un matériau réticulé, en particulier thermoréticulé, la composition liquide précurseur est formée d'au moins une composition liquide entrant dans la composition du matériau réticulable, en particulier thermoréticulable.

Par ailleurs, avantageusement et selon l'invention, on soumet la dispersion des nanoparticules filiformes dans la composition liquide précurseur aux ultrasons.

En outre, avantageusement, dans un procédé selon l'invention, on utilise des nanoparticules filiformes selon l'une au moins des caractéristiques mentionnées ci-dessus. Avantageusement et selon l'invention, on utilise une quantité de nanoparticules filiformes comprise entre 0,5% et 5% en volume. On utilise une quantité de nanoparticules filiformes métalliques sensiblement comprise entre 0,5% et 5,0%, adaptée pour pallier à l'augmentation de la masse du matériau composite tout en conservant d'une part une valeur de conductivité électrique élevée, notamment supérieure à 1 S.m⁻¹, et d'autre part les propriétés mécaniques du matériau polymère initial.

L'invention permet pour la première fois d'obtenir un matériau solide composite de propriétés mécaniques correspondant au moins sensiblement à celles d'une matrice solide isolante (homogène ou composite) avec une conductivité électrique élevée, supérieure à 1 S.m⁻¹, typiquement de l'ordre de 10² S.m⁻¹. Un matériau selon l'invention peut ainsi avantageusement remplacer les matériaux métalliques traditionnels utilisés (aciers, alliages légers...), notamment pour la construction de pièces support et/ou de structure dans les véhicules, notamment les aéronefs, ou encore dans les bâtiments.

Un matériau composite selon l'invention peut aussi être utilisé, à titre de colle ou de joint, pour la réalisation de matériaux d'assemblages collés. En particulier, un matériau composite selon l'invention est adapté pour permettre la réalisation d'une colle composite conductrice.

Un matériau composite selon l'invention peut aussi être utilisé, à titre de revêtement composite, pour la réalisation de peintures composites de conductivité électrique volumique élevée, notamment supérieure à 1 S.m⁻¹, typiquement de l'ordre de 10² S.m⁻¹, et de résistance de surface (en unité normalisée selon les normes ASTM D257.99 et ESDSTM 11.11.2001) inférieure à 10000 Ω/carré.

Avantageusement, un matériau composite selon l'invention est adapté pour permettre la réalisation de pièces chauffantes, notamment par effet Joule, dont l'une des applications est, à titre d'exemple non limitatif, le dégivrage de surface.

D'autres buts, caractéristiques et avantages de l'invention apparaîtront à la lecture de la description suivante, qui se réfère aux figures annexées et des exemples qui suivent à titre non limitatif, sur lesquelles :
- la figure 1 est un schéma synoptique descriptif d'un procédé de fabrication de nanoparticules filiformes métalliques,
- la figure 2 est un schéma en perspective d'un dispositif mis en oeuvre dans un procédé de fabrication de nanoparticules filiformes métalliques,
- la figure 3 est une vue en coupe d'un détail d'un dispositif d'électrodéposition selon l'invention,
- la figure 4 est un organigramme général d'un procédé selon l'invention.

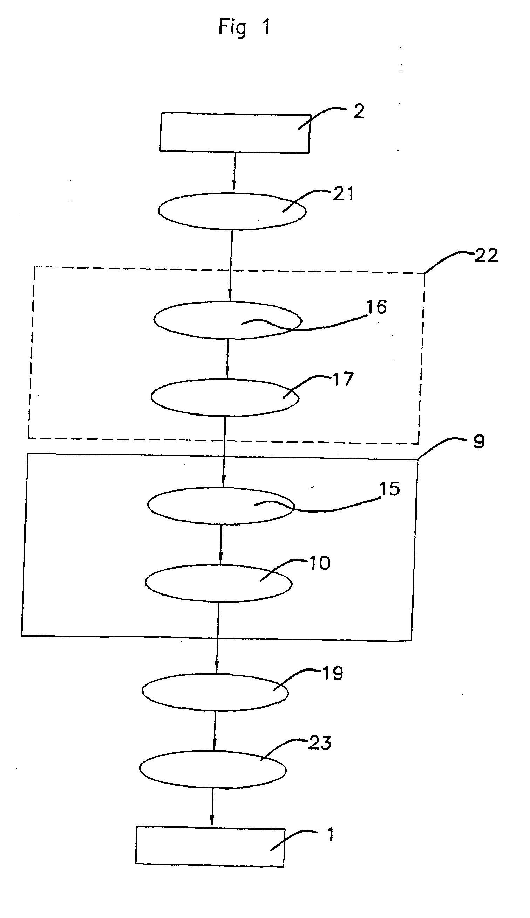

Dans un procédé de fabrication de nanoparticules 1 filiformes métalliques selon l'invention, représenté en figure 1, on utilise une membrane 2 solide présentant des canaux 3 parallèles traversants et débouchants sur les deux faces principales de ladite membrane 2. Par exemple, la membrane 2 est une couche poreuse obtenue par anodisation d'un substrat d'aluminium, par exemple d'épaisseur sensiblement de l'ordre de 50 µm et présentant des pores dont le diamètre moyen de la section droite parallèle aux faces principales de la couche poreuse est par exemple de l'ordre de 200 nm. La membrane 2 est par exemple une membrane de filtration en alumine (Porous Anodised Alumina, Whatman, Réf 6809-5022 et 6809-5002). Dans un procédé selon l'invention, l'épaisseur de la membrane 2 et sa porosité moyenne sont adaptées pour permettre la fabrication de nanoparticules 1 filiformes métalliques présentant une dimension inférieure à 500 nm et un facteur de forme élevé, notamment supérieur à 50.

On réalise une étape 21 d'application d'une couche 14 d'argent métallique sur l'une des faces principales de ladite membrane 2, ladite couche 14 étant adaptée pour fermer les canaux 3 sur la face cathodique de la membrane 2 et pour former un contact électriquement conducteur entre une plaque 6 de métal conducteur, par exemple en cuivre ou en argent, formant la cathode d'un dispositif d'électrodéposition et la membrane 2. On réalise cette application par tous moyens appropriés, notamment par pulvérisation cathodique ou « sputtering » d'un substrat d'argent sur la face cathodique de la membrane 2.

On forme une liaison électriquement conductrice entre la plaque 6 formant la cathode du dispositif d'électrodéposition et la face cathodique de la membrane 2 par contact de la couche 14 d'argent de la membrane 2 avec la plaque 6 formant la cathode. On réalise cette liaison électriquement conductrice en scellant la membrane 2 et la plaque 6 par des moyens mécaniques et/ou adhésifs, notamment par de la laque d'argent.

Une anode 7 est disposée en regard de la face de la membrane 2, opposée à la cathode. L'anode 7, la cathode 6 et la membrane 2 sont noyées dans un bain 4 électrolytique. L'anode 7 est formée d'un fil métallique massif, notamment d'un fil constitué du métal massif à électrodéposer, et dont le diamètre est de l'ordre de 1 mm. Cependant, dans un dispositif de mise en oeuvre d'un procédé selon l'invention, l'anode 7 peut être formée d'un ruban, d'une grille ou d'une plaque. L'anode 7 présente la même composition chimique que le métal formant les cations du bain d'électrodéposition. On place l'anode 7 parallèlement à la surface accessible de la membrane 2 et à une distance de l'ordre de 1 cm de la surface accessible de la membrane 2 solide.

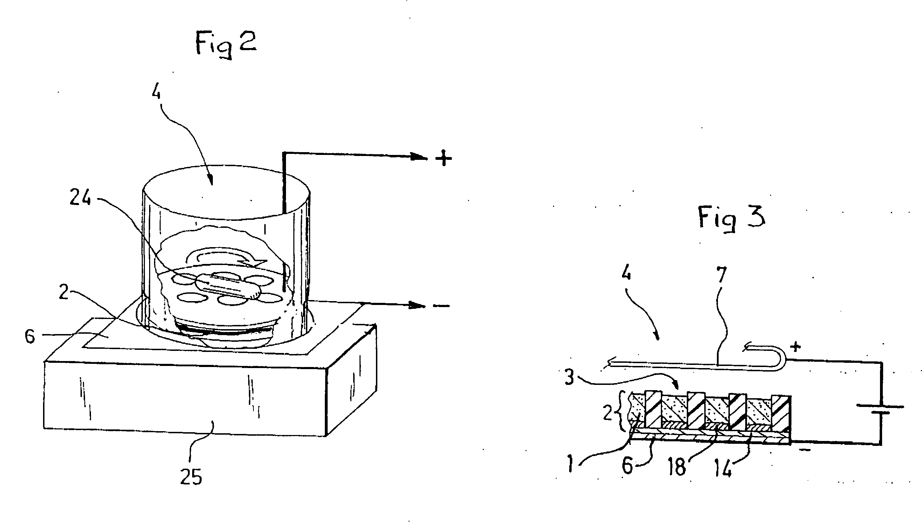

Dans ce dispositif, représenté en figure 2, l'anode 7 est reliée à la borne positive d'un générateur de courant continu, et la cathode 6 est reliée à la borne négative de ce générateur.

Dans cette configuration, le dispositif d'électrodéposition ainsi formé, représenté en figure 2, est adapté pour permettre l'établissement d'un courant stable au cours de l'électrodéposition, et la formation de nanoparticules 1 filiformes de facteur de forme élevé et de grande conductivité dans les canaux 3 de la membrane 2.

Le dispositif d'électrodéposition comprend en outre des moyens d'agitation et d'homogénéisation du bain 4 d'électrodéposition. Ces moyens d'agitation et d'homogénéisation comprennent par exemple un organe 24 magnétique d'agitation placé dans le bain d'électrodéposition de telle sorte que cet organe ne rentre en contact ni avec la membrane 2 solide ni avec le fil métallique formant l'anode 7. En outre, le bain 4 d'électrodéposition est maintenu à une température prédéterminée inférieure à 80°, notamment comprise entre 40°C et 60°C, en particulier de l'ordre de 50°C pour l'électrodéposition d'or, par chauffage du bain 4 d'électrodéposition par un organe 25 de chauffage disposé sous la plaque 6 formant la cathode.

Dans une étape 16 préliminaire d'électrodéposition, on forme une couche 18 d'initiation de croissance, en réalisant une électrodéposition avec un bain d'électrodéposition formé d'une solution contenant des espèces cationiques du nickel, notamment une solution, dite solution de Watts, contenant des cations Ni²⁺. Cette électrodéposition du métal initiateur se réalise au fond des canaux 3 de la membrane 2 à partir de la couche 14 d'argent qui les referme. On réalise cette électrodéposition de façon que l'épaisseur de la couche 18 d'initiation de croissance obtenue soit par exemple de l'ordre de 3 µm. On obtient une telle couche de nickel à l'issue de l'étape 16 préliminaire d'électrodéposition d'une durée d'électrodéposition sensiblement de l'ordre de 5 min pour une valeur moyenne de courant électrique de l'ordre de 80 mA.

Dans une étape subséquente 17 d'électrodéposition des nanoparticules 1 filiformes métalliques, on remplace le bain électrolytique précédent par un bain comprenant la(es) espèce(s) métallique(s) des nanoparticules 1 filiformes métalliques à préparer et on réalise une électrodéposition de ce métal notamment avec une tension entre la cathode 6 et l'anode 7 du dispositif d'électrodéposition, par exemple pour l'électrodéposition d'or, de valeur inférieure à 1 V, notamment de l'ordre de 0,7 V. Dans ces conditions, l'intensité initiale du courant dans le dispositif d'électrodéposition est de sensiblement de l'ordre de 3,5 mA. Au cours du dépôt du métal des nanoparticules 1 filiformes métalliques, l'intensité du courant décroit jusqu'à atteindre une valeur de l'ordre de 0,9 mA. On forme ainsi un matériau composite formé d'une couche d'alumine dont les pores forment un moulage de nanoparticules 1 filiformes métalliques. Les nanoparticules 1 filiformes formées présentent une structure métallique proche de la structure du métal massif, et présentant les propriétés conductrices du métal massif. Les nanoparticules 1 filiformes métalliques ainsi obtenues présentent un facteur de forme élevé. Les nanoparticules 1 filiformes métalliques ainsi obtenues présentent une longueur correspondant à celle des canaux, par exemple supérieure à 40 µm, notamment de l'ordre de 50 µm.

Dans un procédé selon l'invention, représenté en figure 1, on dissocie ensuite la membrane 2 et la plaque 6 formant la cathode du dispositif d'électrodéposition de façon à libérer la face principale de ladite membrane 2 présentant la couche 14 d'argent.

Lors du traitement 9 de dissolution ultérieur, on réalise une étape 15 d'attaque acide de la couche 14 d'argent ainsi exposée, et de la couche 18 d'initiation de croissance formée de nickel. On réalise cette étape 15 d'attaque acide en tamponnant la surface de la membrane 2 avec un coton imbibé d'une solution d'acide nitrique à une concentration de massique de 68%. On peut aussi réaliser cette étape 15 d'attaque acide selon toute méthode appropriée adaptée pour permettre la dissolution de l'argent et du nickel sans toutefois sensiblement permettre la dissolution de l'alumine de la membrane 2 solide. Ainsi, on élimine la couche 14 d'argent et au moins une partie de l'épaisseur de la couche 18 de nickel tout en préservant les nanoparticules 1 filiformes métalliques de ladite attaque 15 acide.

On réalise ensuite une étape 10 d'attaque alcaline et de dissolution de la membrane 2 comprenant les nanoparticules 1 filiformes métalliques, dans des conditions adaptées pour permettre une attaque basique et une solubilisation de l'alumine de la membrane 2 solide dans un bain de dissolution alcalin, tout en préservant le métal des nanoparticules 1 filiformes métalliques.

On immerge par exemple la membrane 2 comprenant les nanoparticules 1 filiformes métalliques dans le bain formé d'une solution aqueuse alcaline d'hydroxyde de sodium ou d'hydroxyde de potassium, à la température ambiante, notamment à une température comprise entre 20°C et 25°C. On choisit une concentration du sel alcalin dans la solution comprise entre 0,1 g/L et la concentration de saturation de la solution, notamment une concentration sensiblement de l'ordre de 48 g/L. Avec une durée de traitement de 15 min dans une solution d'hydroxyde de sodium à 48 g/L, l'alumine de la membrane 2 est complètement solubilisée dans la solution aqueuse d'hydroxyde de sodium et les nanoparticules 1 filiformes métalliques solides sont libérées en suspension dans ladite solution aqueuse d'hydroxyde de sodium.

Il est particulièrement avantageux, dans un procédé selon l'invention, de séparer d'une part la solution aqueuse alcaline contenant l'excès d'hydroxyde de sodium et l'alumine solubilisée, et d'autre part les nanoparticules 1 filiformes métalliques pour permettre l'utilisation ultérieure des nanoparticules 1 filiformes métalliques. On réalise cette séparation 19 par filtration des nanoparticules 1 filiformes métalliques et de la solution aqueuse alcaline en utilisant une membrane en polyamide présentant une porosité moyenne de l'ordre de 0,2 µm. On utilise une membrane nylon WHATMAN (Ref 7402-004) sur laquelle les nanoparticules 1 filiformes métalliques sont retenues. On réalise cette étape de séparation 19 par filtration par tous moyens appropriés, par exemple des moyens de filtration sous vide ou à pression atmosphérique. On réalise ensuite, sur la membrane de polyamide, une étape de lavage des nanoparticules filiformes métalliques avec une quantité d'eau distillée adaptée pour permettre l'élimination de la solution aqueuse alcaline et de l'alumine solubilisée. Il est bien sûr préférable de ne pas laisser les nanoparticules 1 filiformes métalliques en contact direct avec l'oxygène de l'air de façon à minimiser les risques d'oxydation des nanoparticules 1 filiformes métalliques.

Afin de peser la masse des nanoparticules 1 filiformes métalliques produite lors d'un procédé de fabrication selon l'invention, on réalise un rinçage des nanoparticules 1 filiformes métalliques avec un solvant volatile, notamment un solvant choisi parmi l'acétone et l'éthanol. On sèche ensuite les nanoparticules 1 filiformes métalliques obtenues par chauffage une température supérieure à la température d'ébullition du solvant volatile, notamment à 60°C pour l'acétone.

Il est préférable de conserver les nanoparticules 1 filiformes métalliques à l'abri de l'air dans un solvant usuel, par exemple choisi dans le groupe formé de l'eau, de l'acétone, du toluène. On disperse les nanoparticules 1 filiformes métalliques dans le solvant de façon à éviter la formation d'agrégats de nanoparticules 1 filiformes métalliques. Avantageusement, on disperse les nanoparticules 1 filiformes métalliques dans le solvant par un traitement 23 de la suspension des nanoparticules 1 filiformes dans le milieu liquide dans un bain à ultrasons de fréquence sensiblement de l'ordre de 20 kHz pour une puissance de l'ordre de 500 W.

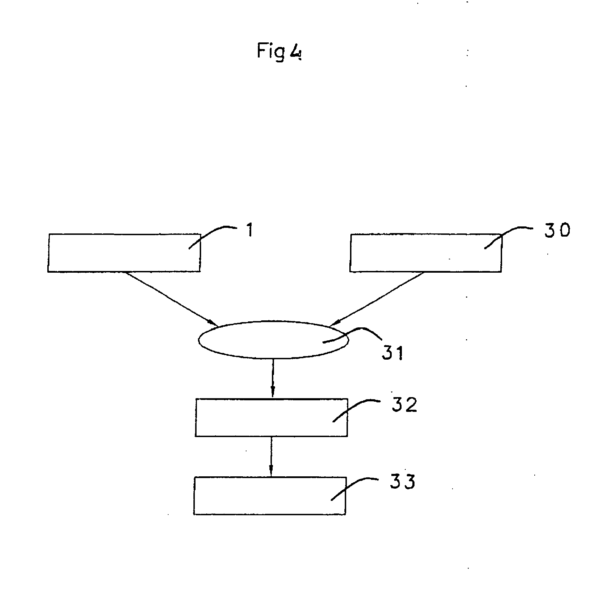

Dans un procédé de fabrication d'un matériau 33 solide composite électriquement conducteur selon l'invention, représenté en figure 4, on réalise une dispersion de nanoparticules 1 filiformes métalliques à l'état non oxydé, présentant une dimension inférieure à 500 nm et de facteur de forme élevé - notamment supérieur à 50-, dans une composition 30 liquide précurseur d'une matrice solide. On choisit la composition 30 liquide dans le groupe formé des polymères isolant électriques thermoplastiques et des polymères isolant électriques thermodurcissables. Par exemple, on choisit un isolant électrique thermoplastique dans le groupe formé du polyamide et des copolymères de polyfluorure de vinylidène (PVDF) et de trifluoroéthylène (TRFE). Un copolymère PVDF-TRFE présente avantageusement une conductivité intrinsèque de l'ordre de 10⁻¹² S.m⁻¹. On réalise cette dispersion par mélange 31 d'une part d'une suspension de nanoparticules 1 filiformes métalliques à l'état non oxydé dans un milieu liquide formé d'un solvant et d'autre part d'une composition liquide obtenue par solubilisation d'un polymère isolant électrique dans le même solvant. Par exemple, on dissout une quantité d'un copolymère de PVDF-TRFE dans une quantité d'acétone et on y ajoute une quantité de la suspension de nanoparticules 1 filiformes dans l'acétone. On réalise ce mélange de façon que la proportion volumique de nanoparticules 1 filiformes métalliques et de copolymère soit inférieure à 10%, en particulier proche de 5%. On homogénéise le mélange des nanoparticules 1 filiformes et la composition 30 de PVDF-TRFE dans l'acétone. Il est possible d'améliorer la dispersion des nanoparticules 1 filiformes solides dans le mélange liquide par un traitement de la suspension avec des ultrasons.

On réalise ultérieurement une étape 32 d'élimination du solvant. On réalise cette étape d'élimination du solvant par tous moyens appropriés, notamment par évaporation du solvant à la pression atmosphérique, notamment à chaud, ou bien par évaporation sous pression réduite. On obtient un composite formé d'une dispersion de nanoparticules 1 filiformes dans une matrice solide de PVDF-TRFE.

On réalise ensuite une étape 33 de mise en forme du matériau solide composite selon l'invention. On réalise cette mise en forme par tous moyens appropriés et notamment par pressage et/ou moulage à chaud.

Dans un procédé selon l'invention, on utilise des nanoparticules 1 filiformes métalliques susceptibles d'être obtenues par un procédé de fabrication représenté en figure 1. On prépare de telles nanoparticules filiformes 1 métalliques, aussi appelés nano-fils, de facteur de forme supérieur à 50, par un procédé d'électrodéposition d'argent dans les canaux d'une membrane solide poreuse, décrit dans les exemples 1 à 5.

### EXEMPLE 1 : Préparation de nano-fils d'or.

On traite par pulvérisation cathodique une membrane de filtration en alumine (Porous Anodised Alumina, Whatman, Réf 6809-5022 ou 6809-5002) avec de l'argent de façon à déposer un film d'argent couvrant la surface de la membrane de filtration. On applique la face de la membrane solide revêtue d'argent (surface conductrice cathodique) sur la plaque formant cathode d'un dispositif d'électrodéposition de façon à former un contact électriquement conducteur entre la plaque formant cathode et la surface argentée de la membrane de filtration. On dépose ensuite, lors de l'étape préliminaire d'électrodéposition, la première couche d'initiation de croissance à partir d'une solution électrolytique de Watts contenant des ions Ni²⁺. On contrôle l'intensité du courant établi entre l'anode et la cathode de façon que la valeur de celui-ci se maintienne à 80 mA pendant 5 min à la température ambiante. On obtient ainsi, sur le fond des pores ouverts de la membrane solide, un dépôt de nickel métallique d'épaisseur sensiblement de l'ordre de 3 µm. On réalise un rinçage des canaux de la membrane solide de façon à extraire des canaux les cations métalliques du bain d'électrodéposition de l'étape préliminaire d'électrodéposition.

Pour l'étape d'électrodéposition des nano-fils d'or, on remplace l'anode en nickel du dispositif d'électrodéposition par une anode en or et on remplace la solution de Watts par une solution d'or complexé à des anions thisulfate-thiosulfite dépourvus de cyanure. On réalise une électrodéposition sous une tension de 0,7 V et en maintenant la température de la solution électrolytique à une valeur proche de 50°C, sous agitation magnétique. Dans ces conditions, l'intensité initiale du courant électrique est sensiblement de l'ordre de 3,5 mA et décroit au cours du dépôt jusqu'à une valeur de l'ordre de 0,9 mA. On traite la face cathodique de la membrane solide en immergeant la membrane solide dans une solution aqueuse d'acide nitrique à une concentration massique de 680 g/L. On immerge ensuite la membrane solide contenant les nanoparticules métalliques dans une solution aqueuse de soude à une concentration de 48 g/L. Au bout de 15 min de traitement, les nano-fils d'or sont libérées dans la solution de soude. On sépare ensuite par filtration, les nano-fils d'or libérés et la solution alcaline. On lave les nano-fils d'or avec de l'acétone. Il est préférable de stocker les nano-fils d'or ainsi préparés dans le même solvant. On obtient 25 mg de nano-fils d'or par cm² de membrane solide. Ces nano-fils d'or présentent un diamètre moyen de l'ordre de 200 nm et une longueur de l'ordre de 50 µm pour un facteur de forme sensiblement proche de 250.

### EXEMPLE 2 : Préparation de nano-fils de nickel.

On prépare, comme décrit dans l'exemple 1, une membrane de filtration en alumine présentant un film d'argent sur sa face cathodique et une couche d'initiation de croissance en nickel.

Pour l'étape d'électrodéposition des nano-fils de nickel, on conserve l'anode en nickel du dispositif d'électrodéposition et la solution de Watts. On réalise une électrodéposition sous une tension comprise entre 3 V et 4 V, notamment de l'ordre de 3 V et en maintenant la température de la solution électrolytique à une valeur proche de la température ambiante et sans agitation de la solution électrolytique. Dans ces conditions, on obtient des nano-fils de nickel de longueur sensiblement de l'ordre de 50 µm en 40 min avec une intensité initiale de courant électrique entre l'anode et la cathode de l'ordre de 180 mA, en 60 min avec une intensité initiale de courant électrique entre l'anode et la cathode de l'ordre de 98 mA, en 90 min avec une intensité initiale de courant électrique entre l'anode et la cathode de l'ordre de 65 mA.

On élimine, de la même façon que dans l'exemple 1, l'argent et le nickel surfacique de la membrane solide et on libère les nano-fils de nickel par traitement alcalin. On obtient 12 mg de nano-fils de nickel par cm² de membrane solide. Ces nano-fils de nickel présentent un diamètre moyen de l'ordre de 200 nm et une longueur de l'ordre de 50 µm pour un facteur de forme proche de 250.

### EXEMPLE 3 : Préparation de nano-fils de cobalt.

On prépare, comme décrit dans l'exemple 1, une membrane de filtration en alumine présentant un film d'argent sur sa face cathodique et une couche d'initiation de croissance en nickel.

Pour l'étape d'électrodéposition des nano-fils de cobalt, on utilise une anode en cobalt et une solution aqueuse de sulfate de cobalt (Co²⁺). Le cobalt présentant un couple électrochimique proche de celui du nickel, on réalise une électrodéposition sous une tension comprise entre 3 V et 4 V et en maintenant la température de la solution électrolytique à une valeur proche de la température ambiante et sans agitation de la solution électrolytique. Dans ces conditions, on obtient des nano-fils de cobalt de longueur sensiblement de l'ordre de 50 µm en 40 min avec une intensité initiale de courant électrique entre l'anode et la cathode de l'ordre de 180 mA, en 60 min avec une intensité initiale de courant électrique de l'ordre de 98 mA, en 90 min avec une intensité initiale de courant électrique de l'ordre de 65 mA.

On élimine, de la même façon que dans l'exemple 1, l'argent et le nickel surfacique de la membrane solide et on libère les nano-fils de cobalt par traitement alcalin.

### EXEMPLE 4 : Préparation de nano-fils d'argent.

On prépare, comme décrit dans l'exemple 1, une membrane de filtration en alumine présentant un film d'argent sur sa face cathodique et une couche d'initiation de croissance en nickel.

Pour l'étape d'électrodéposition des nano-fils d'argent, on utilise une anode en argent et une solution aqueuse de sulfite d'argent. On réalise une électrodéposition sous une tension proche de 0,25 V et en maintenant la température de la solution électrolytique à une valeur proche de 30°C sous agitation de la solution électrolytique. Dans ces conditions, on obtient des nano-fils d'argent de longueur sensiblement de l'ordre de 50 µm en 180 min avec une intensité initiale de courant électrique entre l'anode et la cathode de l'ordre de 9 mA.

On élimine, de la même façon que dans l'exemple 1, l'argent et le nickel surfacique de la membrane solide et on libère les nano-fils d'argent par traitement alcalin.

### EXEMPLE 5 : Préparation de nano-fils de cuivre

On prépare, comme décrit dans l'exemple 1, une membrane de filtration en alumine présentant un film d'argent sur sa face cathodique et une couche d'initiation de croissance en nickel.

Pour l'étape d'électrodéposition des nano-fils de cuivre, on utilise une anode en cuivre et une solution aqueuse de sulfate de cuivre (Cu²⁺). On réalise une électrodéposition sous une tension proche de 0,5 V, particulièrement de 0,6 V et en maintenant la température de la solution électrolytique à une valeur proche de la température ambiante et sans agitation de la solution électrolytique. Dans ces conditions, on obtient des nanoparticules de cuivre de longueur sensiblement de l'ordre de 50 µm en 30 min avec une intensité initiale de courant électrique entre l'anode et la cathode de l'ordre de 100 mA.

On élimine, de la même façon que dans l'exemple 1, l'argent et le nickel surfacique de la membrane solide et on libère les nano-fils de cuivre par traitement alcalin.

### EXEMPLE 6: Préparation d'un matériau composite conducteur à base d'une matrice thermoplastique (PVDF-TRFE).

On disperse 250 mg de nanoparticules d'or (nano-fils d'or obtenus selon l'exemple 1) dans 15 mL d'acétone et on soumet la suspension obtenue à un traitement aux ultrasons dans un bain à ultrasons de fréquence sensiblement de l'ordre de 20 kHz, pour une puissance dispersée de l'ordre de 500 W. D'autre part, on solubilise 443 mg de PVDF-TRFE dans 10 mL d'acétone, et on ajoute la suspension de nano-fils d'or dans la solution de PVDF-TRFE. On homogénéise ce mélange par traitement aux ultrasons à une fréquence de l'ordre de 20 kHz, pour une puissance dispersée de l'ordre de 500 W de façon à préserver la structure des nano-fils. On élimine l'acétone du mélange par évaporation de l'acétone sous pression réduite dans un évaporateur rotatif et on presse le matériau composite obtenu de façon à obtenir un film polymère de 150 µm d'épaisseur. Le taux de charge des nano-fils d'or dans le matériau composite ainsi obtenu est proche de 5% en volume. Une telle charge de 5% en volume des nano-fils d'or dans le matériau composite correspond à une augmentation de la masse de 30% du matériau composite. La conductivité du matériau composite est de 10² S.m⁻¹. En outre, et de façon particulièrement avantageuse, le seuil de percolation d'un tel matériau composite, en deçà duquel le matériau perd sa conductivité, est de l'ordre de 2% (en volume).

A titre comparatif, pour atteindre une telle conductivité de 10² S.m⁻¹ avec une composition de particules micrométriques de facteur de forme inférieur à 50 dans un copolymère de PVDF-TRFE, le taux de charge volumique devrait être d'au moins 28% et l'augmentation de la masse du matériau composite serait de l'ordre de 70% et affectant sensiblement les propriétés mécaniques du composite final.

### EXEMPLE 7: Préparation d'un matériau composite conducteur à base d'une matrice thermodurcissable (résine époxyde).

On disperse 250 mg des nanoparticules d'argent (nano-fils d'argent) dans 15 mL d'acétone et on soumet la suspension obtenue à un traitement aux ultrasons dans un bain à ultrasons de fréquence sensiblement de l'ordre de 20 kHz, pour une puissance dispersée de l'ordre de 500 W. D'autre part, on solubilise 515 mg de résine époxyde de type DGEBA (Ether diglycidique de bisphénol-A) avec un durcisseur formé d'une amine dans 10 mL d'acétone, et on ajoute la suspension de nano-fils d'argent dans la solution de résine époxyde. On homogénéise ce mélange par agitation mécanique puis par traitement aux ultrasons à une fréquence de l'ordre de 20 kHz, pour une puissance dispersée de l'ordre de 500 W de façon à préserver la structure des nano-fils. On élimine l'acétone du mélange par évaporation de l'acétone sous pression réduite dans un évaporateur rotatif. On dégaze ensuite la suspension homogène des nano-fils d'argent dans la matrice époxyde sous pression inférieure à la pression atmosphérique et on réalise la polymérisation de la résine et du durcisseur à température ambiante.

Le taux de charge des nano-fils d'argent dans le matériau composite ainsi obtenu est proche de 5% en volume. Une telle charge de 5% en volume des nano-fils d'argent dans le matériau composite correspond à une augmentation de la masse de 33% du matériau composite. La conductivité du matériau composite est de 10² S.m⁻¹. En outre, et de façon particulièrement avantageuse, le seuil de percolation d'un tel matériau composite, en deçà duquel le matériau n'est pas électriquement conducteur, est de l'ordre de 2% (en volume).

A titre comparatif, pour atteindre une telle conductivité de 10² S.m⁻¹ avec une composition de particules micrométriques de facteur de forme inférieur à 50 dans une résine époxyde de type DGEBA, le taux de charge volumique devrait être d'au moins 20% et l'augmentation de la masse du matériau composite serait de l'ordre de 70%.

### EXEMPLE 8 : Préparation d'un film composite conducteur à base d'une matrice thermoplastique (PEEK - polyétheréthercétone).

On place 1 g de nanoparticules d'argent (nano-fils d'argent), dont la fabrication est décrite à l'exemple 4, et 2,35 g de poudre de PEEK dans la trémie d'une extrudeuse bi-vis portée à la température de 400°C. Le composite extrudé est mis en forme, sous presse, à la température de 400°C de façon à former un film de 150 µm d'épaisseur puis est refroidit à la température ambiante. Le taux de charge en nano-fils d'argent du film composite ainsi obtenu est proche de 5% en volume et de l'ordre de 30% en masse. La conductivité électrique du film composite est de 10² S.m⁻¹.

### EXEMPLE 9: Préparation d'un revêtement composite conducteur à base d'une matrice polyiréthane.

On disperse 250 mg des nanoparticules d'argent (nano-fils d'argent), dont la fabrication est décrite à l'exemple 4, dans une composition de polyols et on soumet la suspension obtenue à un traitement aux ultrasons dans un bain à ultrasons de fréquence sensiblement de l'ordre de 20 kHz, pour une puissance dispersée de l'ordre de 500 W. On ajoute ensuite à la suspension le durcisseur du type isocyanate. La somme de la masse du polyol et de la masse du durcisseur est de 488 mg. La mise en oeuvre du revêtement composite est identique à celle du revêtement polyuréthanne ne contenant pas les nano-fils d'argent. La suspension précurseur du revêtement composite peut être appliquée, comme une peinture, au pinceau ou par projection.

Le taux de charge des nano-fils d'argent dans le revêtement composite ainsi obtenu est proche de 5% en volume et de l'ordre de 34% en masse. La conductivité du revêtement composite est de 10² S.m⁻¹ et sa résistivité de surface est inférieure à 10 Ω/carré.

## Revendications

1. Matériau solide composite électriquement conducteur comprenant :
- une matrice solide de matériau électriquement isolant,
- une charge de matériau électriquement conducteur,
**caractérisé en ce que** ladite charge comprend des nanoparticules, dites nanoparticules (1) filiformes, présentant :
o une longueur, s'étendant selon une direction principale d'allongement,
o deux dimensions, dites dimensions orthogonales, s'étendant selon deux directions transversales orthogonales entre elles et orthogonales à ladite direction principale d'allongement, lesdites dimensions orthogonales étant inférieures à ladite longueur et inférieures à 500 nm, et,
o deux rapports, dits facteurs de forme, entre ladite longueur et chacune des deux dimensions orthogonales, lesdits facteurs de forme étant supérieurs à 50,
lesdites nanoparticules (1) filiformes étant réparties dans le volume de la matrice solide avec une quantité en volume inférieure à 10%, notamment inférieure à 5%.

2. Matériau selon la revendication 1, **caractérisé en ce que** les deux dimensions orthogonales des nanoparticules (1) filiformes sont comprises entre 50 nm et 300 nm -notamment de l'ordre de 200 nm-.

3. Matériau selon l'une des revendications 1 ou 2, **caractérisé en ce que** les nanoparticules (1) filiformes présentent deux facteurs de forme supérieurs à 50 -notamment de l'ordre de 250-.

4. Matériau selon l'une des revendications 1 à 3, **caractérisé en ce que** les nanoparticules (1) filiformes présentent une longueur supérieure à 1 µm, notamment comprise entre 30 µm et 300 µm, en particulier de l'ordre de 50 µm.

5. Matériau selon d'une des revendications 1 à 4, **caractérisé en ce que** la matrice (30) solide comprend au moins un matériau polymère.

6. Matériau selon d'une des revendications 1 à 5, **caractérisé en ce qu'**il présente une conductivité électrique supérieure à 1 S.m⁻¹, notamment de l'ordre de 10² S.m⁻¹.

7. Procédé d'obtention d'un matériau solide composite conducteur **caractérisé en ce qu'**on réalise une dispersion de nanoparticules (1) filiformes de matériau électriquement conducteur présentant :
o une longueur, s'étendant selon une direction principale d'allongement,
o deux dimensions, dites dimensions orthogonales, s'étendant selon deux directions transversales orthogonales entre elles et orthogonales à ladite direction principale d'allongement, lesdites dimensions orthogonales étant inférieures à ladite longueur et inférieures à 500 nm, et,
o deux rapports, dits facteurs de forme, entre la longueur et chacune des deux dimensions orthogonales, lesdits facteurs de forme étant supérieur à 50,
dans une composition (30) liquide précurseur d'une matrice solide de matériau électriquement isolant, de façon à obtenir une quantité en volume de nanoparticules (1) filiformes dans le matériau composite inférieure à 10%.

8. Procédé selon la revendication 7, **caractérisé en ce que** :
- on réalise la dispersion des nanoparticules (1) filiformes dans un solvant liquide,
- on mélange cette dispersion dans la composition (30) liquide précurseur,
- on élimine le solvant liquide.

9. Procédé selon la revendication 8, **caractérisé en ce que** la matrice solide comprenant au moins un matériau polymère, la composition (30) liquide précurseur est une solution dudit matériau polymère dans un solvant liquide choisi parmi le solvant de la dispersion de nanoparticules (1) filiformes et les solvants miscibles avec le solvant de la dispersion de nanoparticules (1) filiformes.

10. Procédé selon la revendication 7, **caractérisé en ce que** la matrice solide comprenant au moins un matériau thermoplastique, la composition (30) liquide précurseur est formée de la matrice solide à l'état fondu.

11. Procédé selon la revendication 7, **caractérisé en ce que** la matrice solide comprenant au moins un matériau thermodurcissable, la composition (30) liquide précurseur est formée d'au moins une composition liquide entrant dans la composition du matériau thermodurcissable.

12. Procédé selon la revendication 7, **caractérisé en ce que** la matrice solide comprenant au moins un matériau réticulé, la composition (30) liquide précurseur est formée d'au moins une composition liquide entrant dans la composition du matériau réticulable.

13. Procédé selon l'une des revendications 7 à 12, **caractérisé en ce qu'**on soumet la dispersion des nanoparticules (1) filiformes dans la composition (30) liquide précurseur aux ultrasons.

14. Procédé selon l'une des revendications 7 à 13, **caractérisé en ce qu'**on utilise des nanoparticules (1) filiformes dont les deux dimensions orthogonales sont comprises entre 50 nm et 300 nm -notamment de l'ordre de 200 nm-.

15. Procédé selon l'une des revendications 7 à 14, **caractérisé en ce que** les nanoparticules (1) filiformes présentent une longueur, s'étendant selon une direction principale d'allongement, supérieure à 1 µm, notamment comprise entre 30 µm et 300 µm, en particulier de l'ordre de 50 µm.

## Patentansprüche

1. Elektrisch leitfähiges festes Verbundmaterial, umfassend:
- eine feste Matrix aus elektrisch isolierendem Material,
- eine Ladung aus elektrisch leitfähigem Material, **dadurch gekennzeichnet, dass** die Ladung Nanopartikel, genannt fadenförmige Nanopartikel (1), aufweist, die Folgendes umfassen:
○ eine Länge, die sich in einer hauptsächlichen Verlängerungsrichtung erstreckt,
○ zwei Abmessungen, genannt orthogonale Abmessungen, die sich in zwei quer liegenden untereinander orthogonalen und zur hauptsächlichen Verlängerungsrichtung orthogonalen Richtungen erstrecken, wobei die orthogonalen Abmessungen kleiner als die Länge und kleiner als 500 nm sind, und
○ zwei Verhältnisse, genannt Formfaktoren, zwischen der Länge und jeder der zwei orthogonalen Abmessungen, wobei die Formfaktoren größer als 50 sind,
wobei die fadenförmigen Nanopartikel (1) im Volumen der festen Matrix mit einer Volumenmenge verteilt sind, die kleiner als 10 %, insbesondere kleiner als 5 % ist.

2. Material nach Anspruch 1, **dadurch gekennzeichnet, dass** die zwei orthogonalen Abmessungen der fadenförmigen Nanopartikel (1) zwischen 50 nm und 300 nm - insbesondere im Bereich von 200 nm - liegen.

3. Material nach einem der Ansprüche 1 oder 2, **dadurch gekennzeichnet, dass** die fadenförmigen Nanopartikel (1) zwei Formfaktoren aufweisen, die größer als 50 - insbesondere im Bereich von 250 - sind.

4. Material nach einem der Ansprüche 1 bis 3, **dadurch gekennzeichnet, dass** die fadenförmigen Nanopartikel (1) eine Länge aufweisen, die größer als 1 µm ist, insbesondere zwischen 30 µm und 300 µm liegt, besonders im Bereich von 50 µm.

5. Material nach einem der Ansprüche 1 bis 4, **dadurch gekennzeichnet, dass** die feste Matrix (30) mindestens ein Polymermaterial umfasst.

6. Material nach einem der Ansprüche 1 bis 5, **dadurch gekennzeichnet, dass** es eine elektrische Leitfähigkeit aufweist, die größer als 1 S.m⁻¹ ist, insbesondere im Bereich von 10² S.m⁻¹ liegt.

7. Verfahren zum Erhalt eines leitfähigen festen Verbundmaterials, **dadurch gekennzeichnet, dass** eine Dispersion von fadenförmigen Nanopartikeln (1) aus elektrisch leitfähigem Material durchgeführt wird, aufweisend:
○ eine Länge, die sich in einer hauptsächlichen Verlängerungsrichtung erstreckt,
○ zwei Abmessungen, genannt orthogonale Abmessungen, die sich in zwei quer liegenden untereinander orthogonalen und zur hauptsächlichen Verlängerungsrichtung orthogonalen Richtungen erstrecken, wobei die orthogonalen Abmessungen kleiner als die Länge und kleiner als 500 nm sind, und
○ zwei Verhältnisse, genannt Formfaktoren, zwischen der Länge und jeder der zwei orthogonalen Abmessungen, wobei die Formfaktoren größer als 50 sind,
in einer flüssigen Zusammensetzung (30), die ein Vorläufer einer festen Matrix aus elektrisch isolierendem Material ist, um eine Volumenmenge von fadenförmigen Nanopartikeln (1) im Verbundmaterial von weniger als 10 % zu erhalten.

8. Verfahren nach Anspruch 7, **dadurch gekennzeichnet, dass**
- die Dispersion der fadenförmigen Nanopartikel (1) in einem flüssigen Lösemittel durchgeführt wird,
- diese Dispersion in der flüssigen Vorläufer-Zusammensetzung (30) gemischt wird,
- das flüssige Lösemittel entfernt wird.

9. Verfahren nach Anspruch 8, **dadurch gekennzeichnet, dass** die feste Matrix mindestens ein Polymermaterial umfasst, die flüssige Vorläufer-Zusammensetzung (30) eine Lösung des Polymermaterials in einem flüssigen Lösemittel ist, ausgewählt aus dem Lösemittel der Dispersion von fadenförmigen Nanopartikeln (1) und den Lösemitteln, die mit dem Lösemittel der Dispersion von fadenförmigen Nanopartikeln (1) gemischt werden können.

10. Verfahren nach Anspruch 7, **dadurch gekennzeichnet, dass** die feste Matrix mindestens ein thermoplastisches Material umfasst, die flüssige Vorläufer-Zusammensetzung (30) aus der festen Matrix im geschmolzenen Zustand gebildet ist.

11. Verfahren nach Anspruch 7, **dadurch gekennzeichnet, dass** die feste Matrix mindestens ein wärmehärtbares Material umfasst, die flüssige Vorläufer-Zusammensetzung (30) aus mindestens einer flüssigen Zusammensetzung gebildet ist, die in die Zusammensetzung des wärmehärtbaren Materials eindringt.

12. Verfahren nach Anspruch 7, **dadurch gekennzeichnet, dass** die feste Matrix mindestens ein vernetztes Material umfasst, die flüssige Vorläufer-Zusammensetzung (30) aus mindestens einer flüssigen Zusammensetzung gebildet ist, die in die Zusammensetzung des vernetzbaren Materials eindringt.

13. Verfahren nach einem der Ansprüche 7 bis 12, **dadurch gekennzeichnet, dass** die Dispersion der fadenförmigen Nanopartikel (1) in der flüssigen Vorläufer-Zusammensetzung (30) Ultraschall unterzogen wird.

14. Verfahren nach einem der Ansprüche 7 bis 13, **dadurch gekennzeichnet, dass** fadenförmige Nanopartikel (1) verwendet werden, deren zwei orthogonale Abmessungen zwischen 50 nm und 300 nm - insbesondere im Bereich von 200 nm - liegen.

15. Verfahren nach einem der Ansprüche 7 bis 14, **dadurch gekennzeichnet, dass** die fadenförmigen Nanopartikel (1) eine Länge aufweisen, die sich in einer hauptsächlichen Verlängerungsrichtung erstreckt, die größer als 1 µm ist, insbesondere zwischen 30 µm und 300 µm liegt, besonders im Bereich von 50 µm.

## Claims

1. Electrically conductive solid composite material comprising:
- a solid matrix of electrically insulating material,
- a filler of electrically conductive material,
**characterised in that** said filler comprises nanoparticles, called filiform nanoparticles (1), having:
o a length extending according to a principal direction of elongation,
o two dimensions, called orthogonal dimensions, extending according to two transverse directions which are orthogonal to one another and orthogonal to said principal direction of elongation, said orthogonal dimensions being smaller than said length and smaller than 500 nm, and
o two ratios, called form factors, between said length and each of the two
orthogonal dimensions, said form factors being greater than 50,
said filiform nanoparticles (1) being distributed in the volume of the solid matrix with a quantity by volume of less than 10%, especially less than 5%.

2. Material according to claim 1, **characterised in that** the two orthogonal dimensions of the filiform nanoparticles (1) are from 50 nm to 300 nm-especially approximately 200 nm.

3. Material according to either claim 1 or claim 2, **characterised in that** the filiform nanoparticles (1) have two form factors greater than 50 - especially of approximately 250.

4. Material according to any one of claims 1 to 3, **characterised in that** the filiform nanoparticles (1) have a length greater than 1 µm, especially from 30 µm to 300 µm, in particular of approximately 50 µm.

5. Material according to any one of claims 1 to 4, **characterised in that** the solid matrix (30) comprises at least one polymeric material.

6. Material according to any one of claims 1 to 5, **characterised in that** it has an electrical conductivity greater than 1 S.m⁻¹, especially of approximately 10² S.m⁻¹.

7. Method for obtaining a conductive solid composite material, **characterised in that** there is prepared a dispersion of filiform nanoparticles (1) of electrically conductive material having:
o a length extending according to a principal direction of elongation,
o two dimensions, called orthogonal dimensions, extending according to two transverse directions which are orthogonal to one another and orthogonal to said principal direction of elongation, said orthogonal dimensions being smaller than said length and smaller than 500 nm, and
o two ratios, called form factors, between the length and each of the two
orthogonal dimensions, said form factors being greater than 50,
in a liquid precursor composition (30) of a solid matrix of electrically insulating material, in such a manner as to obtain a quantity by volume of filiform nanoparticles (1) in the composite material of less than 10%.

8. Method according to claim 7, **characterised in that**:
- the dispersion of filiform nanoparticles (1) is prepared in a liquid solvent,
- the dispersion is mixed into the liquid precursor composition (30),
- the liquid solvent is removed.

9. Method according to claim 8, **characterised in that**, the solid matrix comprising at least one polymeric material, the liquid precursor composition (30) is a solution of said polymeric material in a liquid solvent chosen from the solvent of the dispersion of filiform nanoparticles (1) and solvents that are miscible with the solvent of the dispersion of filiform nanoparticles (1).

10. Method according to claim 7, **characterised in that**, the solid matrix comprising at least one thermoplastic material, the liquid precursor composition (30) is formed of the solid matrix in the molten state.

11. Method according to claim 7, **characterised in that**, the solid matrix comprising at least one thermosetting material, the liquid precursor composition (30) is formed of at least one liquid composition forming part of the composition of the thermosetting material.

12. Method according to claim 7, **characterised in that**, the solid matrix comprising at least one crosslinked material, the liquid precursor composition (30) is formed of at least one liquid composition forming part of the composition of the crosslinkable material.

13. Method according to any one of claims 7 to 12, **characterised in that** the dispersion of filiform nanoparticles (1) in the liquid precursor composition (30) is subjected to ultrasound.

14. Method according to any one of claims 7 to 13, **characterised in that** filiform nanoparticles (1) whose two orthogonal dimensions are from 50 nm to 300 nm-especially approximately 200 nm - are used.

15. Method according to any one of claims 7 to 14, **characterised in that** the filiform nanoparticles (1) have a length extending according to a principal direction of elongation greater than 1 µm, especially from 30 µm to 300 µm, in particular of approximately 50 µm.
